# EUROPÄISCHE PATENTSCHRIFT

(11) **EP 0 334 449 B1**
(45) Veröffentlichungstag und Bekanntmachung des Hinweises auf die Patenterteilung: **15.09.1993**
(21) Anmeldenummer: 89200698.2
(22) Anmeldetag: 20.03.1989
(51) Int. Cl.: B29C 47/92, B29C 49/04

(54) **Blasformmaschine zum Blasformen von Hohlkörpern mit Polsterregelung**
Blowmoulding machine with an adjustable dwellperiod
Machine de soufflage de corps creux comportant un réglage du temps d'attente

(30) Priorität: 24.03.1988 DE 3809857
(43) Veröffentlichungstag der Anmeldung: 27.09.1989
(73) Patentinhaber: Philips Patentverwaltung GmbH, 22335 Hamburg (DE); Philips Electronics N.V., 5621 BA Eindhoven (NL)
(72) Erfinder: Langlois, Jacques, D-3502 Vellmar (DE); Bergmann, Heinrich, D-3500 Kassel (DE); Nuhn, Wolfgang, D-3500 Kassel (DE)
(74) Vertreter: von Laue, Hanns-Ulrich, Dipl.-Ing.

(56) Entgegenhaltungen:
- EP-A- 0 004 281
- EP-A- 0 026 828
- EP-A- 0 058 297
- EP-A- 0 062 788
- DE-A- 3 416 781
- FR-A- 2 327 064
- US-A- 4 159 293
- MODERN PLASTICS INTERNATIONAL, Band 1, Nr. 9, September 1971, Seite 92; "Parison programmer and lenght controller"

## Beschreibung

Die Erfindung bezieht sich auf eine Blasformmaschine zum Blasformen von Hohlkörpern
mit einem Speicherkopf, der mit einem Kunststoff liefernden Extruder verbunden ist und aus dem im gefüllten Zustand ein Ausstoßkolben den Kunststoff durch eine ringspaltförmige Austrittsöffnung zur Erzeugung eines Vorformlings preßt,
mit einer Blasform zur Bildung eines Hohlkörpers aus dem Vorformling und
mit einer Steuerschaltung, die nach Abschluß eines Blasformvorgangs ein Kolbenstellsignal zur Regelung der Position des Ausstoßkolbens aus einem Vergleichssignal ableitet, welches aus der Differenz zwischen Istposition und Sollposition des Ausstoßkolbens gebildet ist, wobei die Sollposition durch Integration aus einem vorgegebenen Geschwindigkeitssollwertprofil ermittelt wird.

Für das Blasformen von Hohlkörpern aus thermoplastischem Kunststoff werden mittels eines Speicherkopfes schlauchförmige Vorformlinge aus dem betreffenden Kunststoffmaterial hergestellt und in einem weiteren Arbeitsgang zwischen zwei Hohlformenhälften (Blasform) zur Endgröße aufgeblasen. Der Speicherkopf ist mit einem Extruder verbunden, aus dem der thermoplastische Kunststoff in den Speicherkopf gelangt. Der Speicherkopf hat eine ringspaltförmige Austrittsöffnung, die verstellbar ist. Der thermoplastische Kunststoff wird durch einen Ausstoßkolben aus der Austrittsöffnung herausgepreßt. Der dabei entstehende Vorformling wird in Abhängigkeit von der Form des zu gewinnenden Hohlkörpers ungleichmäßig gedehnt. Eine gleichmäßige Wandstärke des Hohlkörpers setzt daher eine Profilierung der Wandstärke beim Vorformling voraus (Wandstärkesollwertprofil). Dieses Wandstärkesollwertprofil des Vorformlings wird durch Verstellung der Spaltbreite der Austrittsöffnung während des Auspreßvorgangs und einer Änderung der Geschwindigkeit des Ausstoßkolbens realisiert. Eine auf diese Weise arbeitende Blasformmaschine ist aus der DE-OS 34 16 781 bekannt.

Während eines Ausstoßvorganges wird die Geschwindigkeit des Ausstoßkolbens durch Regelung der Position des Ausstoßkolbens bestimmt. Ein Kolbenstellglied verschiebt den Ausstoßkolben in Abhängigkeit vom Kolbenstellsignal eines Positionsreglers. Der Positionsregler erhält ein Vergleichssignal, das in einer Überlagerungsstufe durch Subtraktion der Istposition von der Sollposition gebildet ist. Die Sollposition wird dabei durch Integration aus einem vorgegebenen Geschwindigkeitssollwertprofil ermittelt. Das Geschwindigkeitssollwertprofil ist in eine bestimmte Anzahl von Segmenten eingeteilt, die verschiedene Positionen kennzeichnen. Von einem Segment zum anderen kann eine Änderung der Geschwindigkeit stattfinden. Dieser durch das Profil vorgegebene Geschwindigkeitsverlauf entspricht dem Profil für die Wanddickensteuerung an der Austrittsöffnung.

Das Geschwindigkeitssollwertprofil wird für ein bestimmtes Volumen innerhalb des Speicherkopfes ermittelt. Bleibt das Volumen des Kunststoffes innerhalb des Speicherkopfes bei aufeinanderfolgenden Ausstoßvorgängen konstant, ergibt sich ein Vorformling (Referenzvorformling), der im wesentlichen die gleichen Merkmale, nämlich konstante Länge und konstantes Volumen, aufweist. Hierbei ist es erforderlich, daß der Zufluß von Kunststoff aus dem Extruder konstant bleibt. Ändert sich dieser Kunststoffzufluß, z.B. durch eine Änderung der Drehzahl des Extruders, ändert sich auch der ausgestoßene Schlauch.

Üblicherweise beginnt der Ausstoßvorgang, wenn der Speicherkopf mit thermoplastischem Kunststoff gefüllt (bis Sollfüllhöhe erreicht ist) und der Blasformvorgang zur Erzeugung eines Hohlkörpers abgeschlossen ist. Ist der Blasformvorgang noch nicht beendet, wird weiterhin Kunststoff in den Speicherkopf gefüllt, bis der Ausstoßvorgang nach Beendigung des Blasformvorganges beginnen kann. Der durch die Überfüllung des Speicherkopfes bedingte zusätzliche Kunststoffzufluß verursacht Veränderungen des Vorformlings. Die Profilierung des Vorformlings wird erst vorgenommen, wenn der zusätzliche Kunststoff als sogenannter "Vorschlauch" ausgestoßen ist. Es entsteht auch eine Wartezeit, wenn der Blasformvorgang abgeschlossen ist, aber der Speicherkopf noch nicht vollständig bis zur Sollfüllhöhe gefüllt ist. Bedingt durch die Wartezeit zwischen Abschluß des Blasformvorganges und Erreichen der Sollfüllhöhe im Speicherkopf und umgekehrt, ergibt sich ein Verlust von Material und eine Verminderung in der Anzahl der herzustellenden Hohlkörper pro Zeiteinheit (Kapazitätsverminderung).

Der Erfindung liegt daher die Aufgabe zugrunde, eine Blasformmaschine zum Blasformen von Hohlkörpern zu schaffen, bei welcher ein Verlust von Material vermindert und die Anzahl der herzustellenden Hohlkörper pro Zeiteinheit vergrößert wird, wobei der beim Ausstoßvorgang entstehende Vorformling weitgehend einem Referenzvorformling entspricht.

Diese Aufgabe wird bei einer Blasformmaschine der eingangs genannten Art dadurch gelöst, daß die Steuerschaltung
- das Vergleichssignal mit einem Zuflußsignal überlagert, welches der Volumenänderung durch den beim Ausstoßen der Füllung des Speicherkopfes aus dem Extruder nachfließenden Kunststoff entspricht, und
- die Abweichung zwischen einem Istpolster und einem Sollpolster für den verbleibenden Kunststoff im Speicherkopf am Ende des Ausstoßvorganges durch Regelung der Drehzahl des Extruders verringert.

Bei dieser Blasformmaschine wird ein Vorformling erzeugt, der auch bei einer Änderung des Extruderzuflußes weitgehend dem Referenzvorformling entspricht. Das Geschwindigkeitssollwertprofil ist für ein konstantes Volumen im Speicherkopf ermittelt worden. Hierbei ist vorausgesetzt worden, daß ein konstanter Zufluß von thermoplastischem Kunststoff aus dem Extruder auftritt. Für dieses Geschwindigkeitssollwertprofil ist eine konstante Sollfüllhöhe, bei welcher der Ausstoßvorgang beginnt, und ein Sollpolster ermittelt worden, bei der der Ausstoßvorgang endet. Die Änderung des Zuflußes von Kunststoff aus dem Extruder wird durch ein Zuflußsignal kompensiert, das dem Vergleichssignal überlagert wird. Das Zuflußsignal ist für den Referenzvorformling vorgegeben. Es entspricht der Menge des thermoplastischen Kunststoffes, die während der Bildung eines Referenzvorformlings in den Speicherkopf fließt. Dieses Zuflußsignal beeinflußt die Sollposition des Ausstoßkolbens so, daß der vom Extruder zusätzlich oder weniger eingeflossene Kunststoff während des Ausstoßvorganges nicht das Volumen des Vorformlings ändern kann. Es wird nur der Kunststoff ausgestoßen, der dem Volumen des Referenzvorformlings entspricht.

Die Steuerschaltung vergleicht noch den nach einem Ausstoßvorgang verbleibenden Kunststoff (Istpolster) mit dem Sollpolster. Abhängig vom Vergleich wird ein Stellsignal zur Regelung der Drehzahl des Extruders abgeleitet, um eine Annäherung des Istpolsters an das Sollpolster zu erreichen. Der Ausstoßvorgang beginnt, sobald der Blasformvorgang beendet ist. Ist die Sollfüllhöhe bei Beginn des Ausstoßvorganges noch nicht erreicht, ist das Istpolster nach dem Ausstoßvorgang kleiner als das Sollpolster. Eine Erhöhung der Drehzahl ist in diesem Fall erforderlich. Eine Verminderung der Drehzahl ist notwendig, wenn die Sollfüllhöhe bei Beginn des Ausstoßvorganges überschritten worden ist. Durch diese Maßnahme wird erreicht, daß der Vorformling weitgehend dem Referenzvorformling entspricht und das Istpolster dem Sollpolster angenähert wird. Es wird so geregelt, daß der restliche Kunststoff im Speicherkopf (Polster) weitgehend konstant bleibt und die Verweilzeit des Kunststoffes ebenfalls. Dies ermöglicht reproduzierbare Vorformlinge herzustellen. Es wird auch kein "Vorschlauch" ausgestoßen. Dadurch wird der Verlust von Material vermindert und die Anzahl der herzustellenden Hohlkörper pro Zeiteinheit vergrößert.

In einer ersten Ausführungsform der Erfindung ist vorgesehen, daß die Steuerschaltung
- das Istpolster durch Subtraktion des am Ende eines Ausstoßvorganges gemessenen Zuflußsignalwert von dem Endpositionssollwert subtrahiert,
- ein Differenzsignal zwischen einem Sollpolster und dem Istpolster bildet und
- aus dem Differenzsignal durch Differenzierung und Integration ein Drehzahlstellsignal für ein Extruderstellglied zur Stellung der Drehzahl erzeugt.

Der am Ende eines Ausstoßvorganges durch Integration aus dem Geschwindigkeitssollwertprofil ermittelte Endpositionssollwert entspricht nicht dem Istpolster. Nach Erzeugung des Vergleichssignals durch Bildung der Differenz zwischen Ist- und Sollposition wird dieses zusätzlich mit einem Zuflußsignal überlagert. Dieses Zuflußsignal muß daher bei der Ermittlung des Istpolsters aus dem Endpositionssollwert berücksichtigt werden. Nach Ermittlung des Istpolsters und der Bildung des Differenzsignals wird durch Differenzierung und Integration das Drehzahlstellsignal für das Extruderstellglied gebildet. Es ist auch möglich, das Istpolster durch Messung des Positionswertes des Ausstoßkolbens am Ende des Ausstoßvorganges zu ermitteln.

Das Zuflußsignal wird in der Steuerschaltung aus dem Drehzahlstellsignal durch Integration gebildet. Da das Volumen proportional dem pro Zeiteinheit integrierten Fluß des Kunststoffes ist, der Fluß aber proportional der Drehzahl und die Drehzahl wiederum proportional dem Drehzahlstellsignal ist, ergibt sich durch Integration aus dem Drehzahlstellsignal das Zuflußsignal. Bei jedem neuen Ausstoßvorgang muß der Integrator auf Null gesetzt werden, da die zugeführte Menge des Kunststoffes bei Beginn des Ausstoßvorganges gleich Null ist.

Eine Regelung des Ausstoßkolbens wird zwischen dem Start des Ausstoßvorganges und Erreichen des Endpositionssollwertes vorgenommen. Hierbei ist vorgesehen, daß ein Kolbenstellglied den Ausstoßkolben in Abhängigkeit vom Kolbenstellsignal zur Regelung des Ausstoßkolbens stellt. Nach Erreichen des Endpositionssollwertes bewirkt das Kolbenstellglied durch ein Rückstellsignal von der Steuerschaltung ein Umkehren des Ausstoßkolben in seine Startposition durch Füllung des Speicherkopfes aus dem Extruder.

Die Steuerschaltung kann als Digitalrechenanordnung (Mikrocomputer) oder mittels diskreter Bauelemente realisiert werden. Für die Erzeugung des Drehzahlstellsignals mittels diskreter Bauelemente ist vorgesehen, daß die Steuerschaltung einen Differential-Integral-Regler enthält, der aus dem mit einer Vergleichsstufe gebildeten Differenzsignal das Drehzahlstellsignal für das Extruderstellglied erzeugt. Des weiteren enthält die Steuerschaltung einen ersten Integrator zur Bildung des Zuflußsignals aus dem Drehzahlstellsignal für das Extruderstellglied.

Ferner enthält die Steuerschaltung noch eine Auswerteschaltung, welche
- den Start des Ausstoßkolbens nach Abschluß eines Blasformvorganges veranlaßt und
- den Endpositionssollwert und das Istpolster ermittelt. Eine weitere von der Auswerteschaltung gesteuerte Schaltung liefert das Geschwindigkeitssollwertprofil. Ein nachgeschalteter zweiter Integrator integriert die Geschwindigkeitssollwerte, welche einer Überlagerungsstufe zugeführt werden, in der die Differenz zwischen Ist- und Sollposition und die Überlagerung von Vergleichs- und Zuflußsignal gebildet wird. Das von der Steuerschaltung gelieferte Kolbenstellsignal wird von einem Positionsregeler erzeugt, welcher das von der Überlagerungsstufe gebildete Signal erhält.

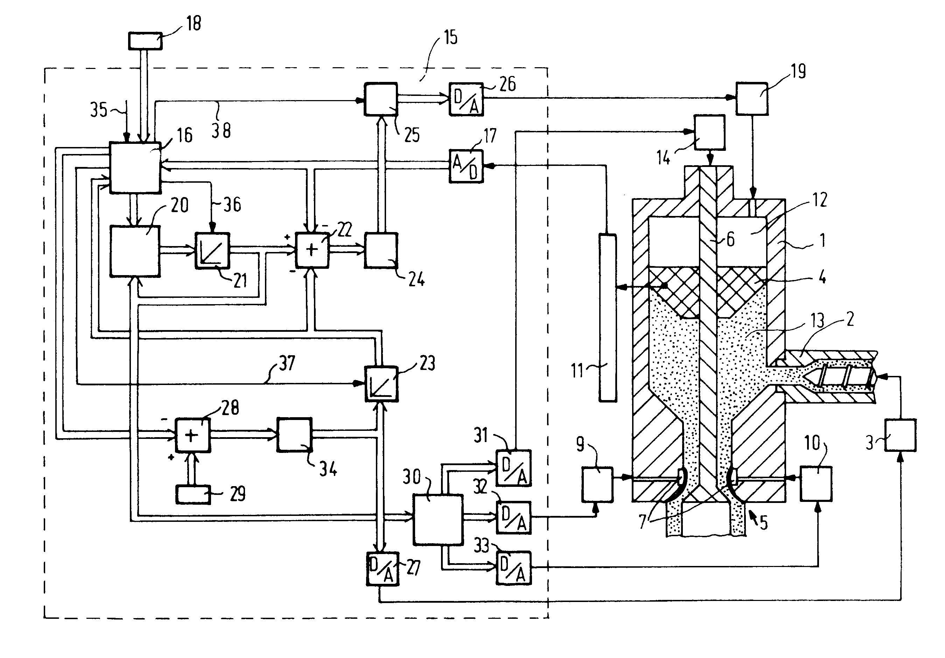

Ein Ausführungsbeispiel der Erfindung wird nachstehend anhand der Zeichnung näher erläutert.

Die in der einzigen Figur schematisch dargestellte Blasformmaschine enthält einen Speicherkopf 1, welcher diskontinuierlich aus thermoplastischen Kunststoff 13 Vorformlinge erzeugt. Eine hier nicht näher dargestellte Blasform dient zur Pressung der Vorformlinge zu Hohlkörpern. Der thermoplastische Kunststoff 13 wird von einem Extruder 2 geliefert, der von einem Extruderstellglied 3 gesteuert wird. Das Extruderstellglied 3 stellt die Drehzahl des Extruders ein und bestimmt damit den Fluß des in den Speicherkopf 1 fließenden thermoplastischen Kunststoffes 13. Der vom Extruder 2 in den zylinderförmigen Speicherkopf 1 eingetretene thermoplastische Kunststoff 13 wird von einem Ausstoßkolben 4 durch eine ringspaltförmige Austrittsöffnung 5 herausgepreßt. Die Spaltbreite wird durch einen Dorn 6 stetig verstellt. Die Wanddicke eines Vorformlings kann noch mittels eines flexiblen Düsenringes 7 durch mehrere Stellglieder partiell verstellt werden (partielle Wanddicken-Verstellung). In der Zeichnung wird als Beispiel der Düsenring 7 durch zwei Wanddickenstellglieder 9 und 10 verstellt. Der Dorn 6 wird von einem Dornstellglied 14 verstellt.

Die Position des Ausstoßkolbens 4, der von einem Kolbenstellglied 19 (Hydraulikstellglied) betätigt wird, wird mittels eines Positionsgebers 11 gemessen. Das Herauspressen des thermoplastischen Kunststoffes 13 mittels des Ausstoßkolbens 4 aus der ringspaltförmigen Austrittsöffnung 5 wird durch eine Hydrauliköleinfüllung in den Hohlraum 12 des Speicherkopfes 1 bewerkstelligt, der nicht mit thermoplastischem Kunststoff 13 gefüllt ist. Wenn der Ausstoßvorgang beendet ist, fließt das Hydrauliköl aus dem Hohlraum 12 wieder heraus, und der Ausstoßkolben 4 wird durch den vom Extruder 2 gelieferten thermoplastischen Kunststoff 13 in seine Startposition gehoben.

Geregelt bzw. gesteuert wird der Speicherkopf 1 von einer Steuerschaltung 15, die aus diskreten digitalen Bauelementen aufgebaut ist. Die Steuerschaltung 15 enthält eine Auswerteschaltung 16, welche die vom Positionsgeber 11 ermittelte Istposition des Ausstoßkolbens 4 über einen Analog-Digital-Umsetzer 17 geliefert wird. Über eine Eingabeeinheit 18 werden der Auswerteschaltung 16 die Sollfüllhöhe und das Sollpolster eingegeben. Das Sollpolster stellt den restlichen im Speicherkopf 1 verbleibenden Kunststoff 13 am Ende eines Ausstoßvorganges dar. Die Auswerteschaltung 16 enthält noch ein Zustandssignal über eine Leitung 35 von einer Blasformsteuerschaltung, die angibt, ob die Blasform bereit ist, einen neuen Vorformling aufzunehmen (der Blasformvorgang ist abgeschlossen). Des weiteren enthält die Auswerteschaltung am Ende eines Ausstoßvorganges einen Zuflußsignalwert.

Stellt die Auswerteschaltung 16 fest, daß die Blasform zur Aufnahme eines neuen Vorformlings bereit ist, wird einer Schaltung 20 ein Startsignal gegeben, woraufhin diese ein Geschwindigkeitssollwertprofil ausgibt. Der Schaltung 20 ist vor Beginn des Ausstoßvorganges der Start- und Endpositionssollwert von der Auswerteschaltung 16 zugeführt worden. Das Geschwindigkeitssollwertprofil ist für einen Referenzvorformling ermittelt worden und stellt die Geschwindigkeit des Ausstoßkolbens in Abhängigkeit von der Position des Ausstoßkolbens 4 zwischen Sollfüllhöhe und Sollpolster dar. Das Geschwindigkeitssollwertprofil ist in einzelne Segmente eingeteilt, die verschiedene Positionen kennzeichnen. Von Segment zu Segment kann sich die Geschwindigkeit linear ändern. Der Blasformvorgang kann eher oder später beendet sein als die Füllung des Speicherkopfes 1 bis zur Sollfüllhöhe. Der Ausstoßvorgang beginnt in diesen Fällen nicht bei der Sollfüllhöhe. Der Startpositionssollwert ist daher die Istposition beim Ende des Blasformvorganges. Die Auswerteschaltung 16 ermittelt den Endpositionssollwert durch folgende Berechnung: Zuerst wird der Sollhub durch Subtraktion des Sollpolsters von der Sollfüllhöhe gebildet. Danach wird der Endpositionssollwert durch eine weitere Subtraktion des Sollhubes von dem Startpositionssollwert ermittelt.

Die von der Schaltung 20 ausgegebenen Geschwindigkeitssollwerte werden in einem Integrator 21 integriert und als Sollposition einer Überlagerungsstufe 22 zugeführt. Die vom Integrator 21 gelieferte Sollposition wird zur Schaltung 20 rückgekoppelt und dient dazu, das Geschwindigkeitssollwertprofil in Abhängigkeit von der Sollposition umzuschalten. Stellt die Schaltung 20 fest, daß der Endpositionssollwert erreicht ist, wird die Ausgabe des Geschwindigkeitssollwertprofils beendet. Der Integrator 21 wird von der Auswerteschaltung 16 über die Leitung 36 vor Beginn eines Ausstoßvorganges auf Istposition gesetzt.

Der Überlagerungsstufe 22 wird außerdem die Istposition vom Analog-Digital-Umsetzer 17 und von einem weiteren Integrator 23 ein Zuflußsignal zugeführt. Das Zuflußsignal wird durch Integration des Drehzahlstellsignals im Integrator 23 für das Extruderstellglied 3 gebildet. In der Überlagerungsstufe 22 wird das Zuflußsignal und die Istposition von der Sollposition subtrahiert. Das aus der Subtraktion entstandene Signal wird einem Positionsregler 24 geliefert, der ein Kolbenstellsignal erzeugt, welches über eine Rückstellschaltung 25 und einen Digital-Analog-Umsetzer 26 auf das Kolbenstellglied 19 gegeben wird. Von der Auswerteschaltung 16 wird über eine Leitung 38 der Rückstellschaltung 25 ein Signal zugeführt, welches bewirkt, daß zu Beginn des Ausstoßvorganges dem Kolbenstellglied 19 das Kolbenstellsignal zugeführt wird. Am Ende des Ausstoßvorganges wird das Kolbenstellglied 19 so geschaltet, daß der Ausstoßkolben 4 durch die Füllung des Speicherkopfes 1 mit thermoplastischem Kunststoff in seine Startposition zurückkehrt. Auch wenn der Ausstoßkolben 4 den Kunststoff 13 vollständig aus dem Speicherkopf 1 herausgepreßt hat, d.h. der Ausstoßkolben 4 den mechanischen Anschlag des Speicherkopfes 1 erreicht hat, bewirkt die Auswerteschaltung 16 ein Umkehren des Ausstoßkolbens 4 in seine Startposition durch ein Signal über die Leitung 38 an die Rückstellschaltung 25.

Der Referenzvorformling ist für ein bestimmtes Volumen innerhalb des Speicherkopfes 1 und einen bestimmten Zufluß von Kunststoff aus dem Extruder 2 während des Ausstoßvorganges ermittelt worden. Da während des Ausstoßvorganges der vom Extruder 2 gelieferte Kunststoff sich ändern kann, muß dann die Sollposition kompensiert werden, um einen Vorformling zu erzeugen, der dem Referenzvorformling entspricht. Das Volumen des Kunststoffes, das während des Ausstoßvorganges zusätzlich oder weniger in den Speicherkopf 1 hineinfließt, ist proportional dem pro Zeiteinheit integrierten Zufluß des Kunststoffes. Dieser Fluß ist wiederum proportional der Drehzahl und die Drehzahl proportional dem Drehzahlstellsignal. Durch Integration des Drehzahlstellsignals im Integrator 23 ergibt sich also das Zuflußsignal, das dem einfließenden Volumen während des Ausstoßvorganges entspricht. Der Integrator 23 wird vor Beginn eines Ausstoßvorganges von der Auswerteschaltung 16 über die Leitung 37 durch ein Rücksetzsignal auf Null gesetzt.

Um zu erreichen, daß der Vorformling weitgehend dem Referenzvorformling entspricht, ist eine Regelung der Drehzahl des Extruders 2 vorgesehen. Hiermit wird erreicht, daß der Ausstoßvorgang bei Sollfüllhöhe beginnt und bei Sollpolster endet. In der Auswerteschaltung 16 wird am Ende eines Ausstoßvorganges das Istpolster ermittelt. Hierbei berechnet die Auswerteschaltung 16 durch Subtraktion des am Ende des Ausstoßvorganges gemessenen Zuflußsignalwertes von dem Endpositonssollwert das Istpolster. Der Endpositionssollwert ist, wie schon gesagt, die Sollposition des Geschwindigkeitssollwertprofils am Ende der Profilausgabe. Also der Wert, welcher der Überlagerungsstufe 22 vom Integrator 23 am Ende der Profilausgabe zugeführt wird. Das Istpolster wird einem Eingang einer Vergleichsstufe 28 zugeführt, deren anderem Eingang das Sollpolster von einem Speicherglied 29 zugeführt wird. In der Vergleichsstufe 28 wird das Differenzsignal zwischen dem Sollpolster und dem Istpolster durch Subtraktion des Istpolsters vom Sollpolster gebildet. Das Differenzsignal wird einem Differential-Integral-Regler 34 zugeführt, der das Drehzahlstellsignal erzeugt, welches dem Integerator 23 und über einen Digital-Analog-Umsetzer 27 dem Extruderstellglied 3 zugeführt wird. Mittels dieses Reglers 34 wird erreicht, daß das Istpolster dem Sollpolster angenähert wird. Untersuchungen haben gezeigt, daß der Regelkreis stabil ist.

Die Wanddickenstellglieder 9 und 10 und das Dornstellglied 14 werden von einer Schaltung 30 gesteuert, welche die jeweiligen Sollwerte (Wandstärkesollwertprofile) über Digital-Analog-Umsetzer 31, 32 und 33 für die Dornstellung und die Wanddicken in Abhängigkeit von der Sollposition liefert.

## Patentansprüche

1. Blasformmaschine zum Blasformen von Hohlkörpern mit einem Speicherkopf (1), der mit einem Kunststoff (13) liefernden Extruder verbunden ist und aus dem im gefüllten Zustand ein Ausstoßkolben (4) dem Kunststoff durch eine ringspaltförmige Austrittsöffnung (5) zur Erzeugung eines Vorformlings preßt,
mit einer Blasform zur Bildung eines Hohlkörpers aus dem Vorformling und
mit einer Steuerschaltung (15), die nach Abschluß eines Blasformvorganges ein Kolbenstellsignal zur Regelung der Position des Ausstoßkolbens aus einem Vergleichssignal ableitet, welches aus der Differenz zwischen Istposition und Sollposition des Ausstoßkolbens gebildet ist, wobei die Sollposition durch Integration aus einem vorgegebenen Geschwindigkeitssollwertprofil ermittelt wird,
dadurch gekennzeichnet, daß die Steuerschaltung (15)
- das Vergleichssignal mit einem Zuflußsignal überlagert, welches der Volumenänderung durch den beim Ausstoßen der Füllung des Speicherkopfes (1) aus dem Extruder (2) nachfließenden Kunststoff entspricht, und
- die Abweichung zwischen einem Istpolster und einem Sollpolster für den verbleibenden Kunststoff im Speicherkopf am Ende des Ausstoßvorganges durch Regelung der Drehzahl des Extruders verringert.

2. Blasformmaschine nach Anspruch 1,
dadurch gekennzeichnet, daß die Steuerschaltung (15)
- das Istpolster durch Subtraktion des am Ende eines Ausstoßvorganges gemessenen Zuflußsignalwert von dem Endpositionssollwert gewinnt,
- ein Differenzsignal zwischen einem Sollpolster und dem Istpolster bildet und
- aus dem Differenzsignal durch Differenzierung und Integration ein Drehzahlstellsignal für ein Extruderstellglied (3) zur Stellung der Drehzahl erzeugt.

3. Blasformmaschine nach Anspruch 2,
dadurch gekennzeichnet, daß die Steuerschaltung (15) aus dem Drehzahlstellsignal durch Integration das Zuflußsignal bildet.

4. Blasformmaschine nach Anspruch 3,
dadurch gekennzeichnet, daß ein Kolbenstellglied (19) den Ausstoßkolben (4) in Abhängigkeit vom Kolbenstellsignal zur Regelung der Position des Ausstoßkolbens stellt und daß das Kolbenstellglied durch ein Rückstellsignal von der Steuerschaltung (15) nach Erreichen des Endpositionssollwertes ein Umkehren des Ausstoßkolbens in seine Startpositon durch Füllung des Speicherkopfes (1) aus dem Extruder (2) bewirkt.

5. Blasformmaschine nach einem der Ansprüche 2 bis 4,
dadurch gekennzeichnet, daß die Steuerschaltung (15) einen Differential-Integral-Regler (34) enthält, der aus dem in einer Vergleichsstufe (28) gebildeten Differenzsignal das Drehzahlstellsignal für das Extruderstellglied (3) erzeugt.

6. Blasformmaschine nach Anspruch 5,
dadurch gekennzeichnet, daß die Steuerschaltung (15) einen ersten Integrator (23) zur Bildung des Zuflußsignals aus dem Drehzahlstellsignal für das Extruderstellglied (3) enthält.

7. Blasformmaschine nach Anspruch 6,
dadurch gekennzeichnet, daß die Steuerschaltung (15) eine Auswerteschaltung (16), welche
- den Start des Ausstoßkolbens (4) nach Abschluß eines Blasformvorganges veranlaßt und
- den Endpositionssollwert und das Istpolster ermittelt, eine von der Auswerteschaltung gesteuerte Schaltung (20) zur Lieferung des Geschwindigkeitssollwertprofils, einen zweiten Integrator (21) zur Integration der Geschwindigkeitssollwerte, eine Überlagerungsstufe (22), in der die Differenz zwischen Ist- und Sollposition und die Überlagerung von Vergleichs- und Zuflußsignal gebildet wird, und einen Positionsregler (24) enthält, welcher aus dem von der Überlagerungsstufe gebildeten Signal das Kolbenstellsignal erzeugt.

## Claims

1. A blowmoulding machine for the blowmoulding of hollow articles, comprising an accumulator head (1) which is connected to an extruder supplying a synthetic material (13) and wherefrom, in the filled condition, a discharge piston (4) drives the synthetic material through an annular slit-shaped discharge opening (5) so as to produce a preform,
comprising a blowmould for forming a hollow article from the preform, and comprising a control circuit (15) which, after completion of a blowmoulding sequence, derives a piston adjusting signal for controlling the position of the discharge piston (4) from a comparison signal which is formed from the difference between the actual position and the reference position of the discharge piston (4), the reference position being determined by integration from predetermined speed reference value profile,
characterized in that the control circuit (15)
- superimposes an influx signal on the comparison signal, which influx signal corresponds to the change in volume due to the afterflow of synthetic material from the extruder (2) upon the discharging of the contents of the accumulator head (1), and
- reduces the deviation between an actual cushion and a reference cushion for the synthetic material remaining in the accumulator head at the end of the discharge step by controlling the rotational speed of the extruder.

2. A blowmoulding machine as claimed in Claim 1,
characterized in that the control circuit (15)
- derives the actual cushion by subtraction of the influx signal value measured at the end of a discharge step from the reference value for the final position,
- forms a difference signal between a reference cushion and the actual cushion, and
- generates a rotational speed adjusting signal for an extruder adjusting member (3) for adjusting the rotational speed from the difference signal by differentiation and integration.

3. A blowmoulding machine as claimed in Claim 2,
characterized in that the control circuit (15) forms the influx signal from the rotational speed adjusting signal by integration.

4. A blowmoulding machine as claimed in Claim 3,
characterized in that a piston adjusting member (19) adjusts the discharge piston (4) in dependence on the piston adjusting signal in order to control the position of the discharge piston and in that the piston adjusting member returns the discharge piston to its initial position, via a reset signal from the control circuit (15) by fitting the accumulator head (1) from the extruder (2), after the reference value for the final position has been reached.

5. A blowmoulding machine as claimed in any one of the Claims 2 to 4,
characterized in that the control circuit (15) includes a differential integral controller (34) which generates the rotational speed adjusting signal for the extruder adjusting member (3) from the difference signal formed in a comparison stage (28).

6. A blowmoulding machine as claimed in Claim 5,
characterized in that the control circuit (15) includes a first integrator (23) for forming the influx signal from the rotational speed adjusting signal for the extruder adjusting member (3).

7. A blowmoulding machine as claimed in Claim 6,
characterized in that the control circuit (15) includes an evaluation circuit (16) which
- initiates the start of the discharge piston (4) after completion of a blowmoulding sequence, and
- determines the reference value for the final position and the actual cushion, a circuit (20) which is controlled by the evaluation circuit so as to supply the speed reference value profile, a second integrator (21) for integrating the speed reference values, a superimposition stage (22) in which the difference between actual position and reference position and the superimposition of comparison signal and influx signal is formed, and a position controller (24) which generates the piston adjusting signal from the signal formed by the superimposition stage.

## Revendications

1. Machine de soufflage de corps creux comportant :
une tête de stockage (1) qui est raccordée à une extrudeuse débitant une matière plastique (13) et hors de laquelle, lorsqu'elle est remplie, un piston d'éjection (4) refoule la matière plastique à travers une ouverture de sortie en forme de fente annulaire (5) pour produire une ébauche,
un moule de soufflage pour former un corps creux à partir de l'ébauche, et
un circuit de commande (15) qui, une fois terminée une opération de soufflage, délivre un signal de position du piston pour régler la position du piston d'éjection à partir d'un signal de comparaison, lequel signal est formé de la différence entre la position réelle et la position théorique du piston d'éjection, la position théorique étant calculée par intégration à partir d'un profil prédéterminé des valeurs théoriques de la vitesse,
caractérisée en ce que le circuit de commande (15) :
- superpose le signal de comparaison à un signal d'alimentation, qui correspond à la variation de volume par la matière plastique s'écoulant de l'extrudeuse (2) lors de l'éjection de la charge de la tête de stockage (1), et
- réduit l'écart entre un volume résiduel réel et un volume résiduel théorique pour la matière plastique subsistant dans la tête de stockage à la fin de l'opération d'éjection par réglage du nombre de tours de l'extrudeuse.

2. Machine de soufflage selon la revendication 1, caractérisée en ce que le circuit de commande (15) :
- soustrait le volume résiduel réel par soustraction de la valeur du signal d'alimentation mesurée à la fin d'une opération d'éjection de la valeur théorique de la position finale,
- forme un signal différentiel entre un volume résiduel théorique et le volume résiduel réel, et
- produit, à partir du signal différentiel, par différentiation et intégration, un signal de réglage du nombre de tours destiné à un élément de réglage de l'extrudeuse (3) qui réglera le nombre de tours.

3. Machine de soufflage selon la revendication 2, caractérisée en ce que le circuit de commande (15) forme le signal d'alimentation par intégration à partir du signal de réglage du nombre de tours.

4. Machine de soufflage selon la revendication 3, caractérisée en ce qu'un élément de réglage du piston (19) règle le piston d'éjection (4) en fonction du signal de réglage du piston pour régler le piston d'éjection et, une fois que la valeur théorique de la position finale a été atteinte, l'élément de réglage du piston active, grâce à un signal de rappel du circuit de commande (15), un déplacement en sens inverse du piston d'éjection dans sa position de départ par remplissage de la tête de stockage (1) par l'extrudeuse (2).

5. Machine de soufflage selon l'une quelconque des revendications 2 à 4, caractérisée en ce que le circuit de commande (15) contient un régulateur intégral différentiel (34) qui produit le signal de réglage de nombre de tours pour l'élément de réglage de l'extrudeuse (3) à partir du signal différentiel formé par un étage de comparaison (28).

6. Machine de soufflage selon la revendication 5, caractérisée en ce que le circuit de commande (15) contient un premier intégrateur (23) pour former le signal d'alimentation à partir du signal de réglage du nombre de tours pour l'élément de réglage de l'extrudeuse (3).

7. Machine de soufflage selon la revendication 6, caractérisée en ce que le circuit de commande (15) comporte, en outre, un circuit d'évaluation (16) qui :
- provoque le démarrage du piston d'éjection (4) à la fin d'une opération de soufflage, et
- calcule la valeur théorique de la position finale et le volume résiduel réel,
un circuit (20) commandé par le circuit d'évaluation pour fournir le profil des valeurs théoriques de la vitesse, un second intégrateur (21) monté en aval pour intégrer les valeurs théoriques de la vitesse, un étage de superposition (22) dans lequel on forme la différence entre la position réelle et la position théorique ainsi que la superposition du signal de comparaison et du signal d'alimentation, et un régulateur de position (24) qui produit le signal de réglage du piston à partir du signal formé par l'étage de superposition.
